(19) Europäisches Patentamt / European Patent Office / Office européen des brevets

(11) **EP 4 202 725 A1**

(12) **EUROPEAN PATENT APPLICATION**

(43) Date of publication:
**28.06.2023 Bulletin 2023/26**

(21) Application number: **21306907.3**

(22) Date of filing: **22.12.2021**

(51) International Patent Classification (IPC):
*G06F 16/435* (2019.01)

(52) Cooperative Patent Classification (CPC):
**G06F 16/435**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Naver Corporation**
**Seongnam-si, Gyeonggi-do 13561 (KR)**

(72) Inventors:
- **Thonet, Thibaut**
  **38000 Grenoble (FR)**
- **Renders, Jean-Michel**
  **38950 Quaix En Chartreuse (FR)**

(74) Representative: **Grünecker Patent- und Rechtsanwälte**
**PartG mbB**
**Leopoldstraße 4**
**80802 München (DE)**

(54) **JOINT PERSONALIZED SEARCH AND RECOMMENDATION WITH HYPERGRAPH CONVOLUTIONAL NETWORKS**

(57)  A method of training a hypergraph convolutional network (HGCN) comprises: constructing a hypergraph from training data that comprises a plurality of search instances and a plurality of recommendation instances, wherein the hypergraph represents each of the plurality of search instances and each of the plurality of recommendation instances as a hyperedge linking corresponding nodes; randomly initializing base embeddings associated with the hypergraph nodes propagating the base embeddings through one or more convolutional layers of the HGCN; computing, based on an aggregation of the base embeddings and embeddings obtained from the one or more convolutional layers, a first loss based on a prediction of an item given a corresponding user profile and query and a second loss based on a prediction of a query given a corresponding user profile and content item; and training the HGCN by updating the base embeddings based on a combination of the losses.

FIG. 1B

EP 4 202 725 A1

## Description

## Technical Field

The present disclosure relates to content retrieval in the context of both search and recommendation. In particular, the present disclosure relates to the use of neural networks for recommending content items to a user as well as providing content items in response to receiving a user search query.

## Background

While Information Retrieval (IR) and Recommender Systems (RS) have long been regarded as two distinct facets of the information filtering problem, nowadays this distinction is becoming increasingly blurred. For instance, numerous e-commerce platforms offer users hybrid ways of exploring a large base of heterogeneous items, by deploying a combination of search and recommendation tools to accurately identify what users need or prefer in this vast maze of possibilities. The emergence of mixed-initiative conversational agents and chatbots is another example of applications where IR and RS steps are intimately connected to solve a joint session-based objective. Roughly speaking, IR and RS tasks mainly differ by the presence of a query: IR methods are essentially content-based methods and rely on a query understanding or query representation step, in order to effectively match the query with the indexed items. RS methods do not use any query information, but rely on the knowledge of the recommendation context and past user history to score the indexed items.

Traditionally, the search and recommendation tasks are performed separately, by distinct models. The "Joint Personalized Search and Recommendation" (JPSR) task, however, consists in ranking a list of items by decreasing order of relevance to user needs or preferences in a given context. For this task, some instances are triggered by a given query (search instances, initiated by the user), while others are not associated with any query (recommendation instances, initiated by the system).

The problem of unifying search and recommendation through a single model has been studied in only a very few works. The most notable of them is the Joint Search and Recommendation (JSR) model (Zamani H. et al., "Learning a Joint Search and Recommendation Model from User-Item Interactions", WSDM, 717-725, 2020). A predecessor of this approach was introduced by Zamani et al. in "Joint Modeling and Optimization of Search and Recommendation" (Zamani H. et al., DESIRES, 36-41, 2018). In this earlier version, the authors defined a multi-task model made of a retrieval component and a recommendation component. Zamani's approaches, however, require items to be associated with a text document because the task tackled by JSR assumes that items are associated with a text description. Additionally, these approaches both ignore the dependency between users and queries, which is crucial to provide personalized results. Moreover, JSR does not learn query term embeddings, but relies on pre-trained word embeddings and does not exploit multi-hop user/item neighborhoods using (hyper-)GNN techniques. Instead, JSR scores users and items using stacked fully-connected layers which are however oblivious of the neighborhood information. Finally, at inference time, JSR follows distinct techniques to tackle the recommendation and retrieval cases, and does not exploit user embeddings for retrieval.

Different from these works, Wu *et al.* (Wu T. et a/., "Zero-Shot Heterogeneous Transfer Learning from Recommender Systems to Cold-Start Search Retrieval", CIKM, 2821-2828, 2020) investigates the problem of transferring learned knowledge from a recommender system to a search engine defined over a common item base. Wu's approach, however, only allows transfer in the recommendation-to-search direction and thus cannot be used for JPSR.

Graph Neural Networks (GNNs) have been successfully applied to recommendation tasks, especially to Collaborative Filtering (CF) problems, where only the interactions between users and items are considered (ratings, clicks, views, purchases, etc.). They basically combine the expressive power of deep neural networks with the exploitation of the structural information given by an underlying graph, by propagating and smoothing node information through convolution operations. This results in higher-level, graph-contextualized node embeddings that are then used to solve the final task. Standard CF problems involve two-way interactions, i.e., interactions over (user, item) pairs. Naturally, these interactions can be represented as edges, possibly weighted, on a bipartite graph, and that is the approach followed by most GNN-based recommendation methods. However, when considering $n$-way interactions with $n > 2$, such as search instances where the outcome of the interaction over a (user, item, query) triplet is observed, bipartite graphs can no longer be adopted.

PinSage (Ying R. et a/., "Graph Convolutional Neural Networks for Web-scale Recommender Systems", KDD, 974-983, 2018) was among the first GNN approaches devised for recommendation. It essentially adapted the GraphSage model (Hamilton W. L. et al., "Inductive Representation Learning on Large Graphs", NeurIPS, 1025-1035, 2017) to recommendation and implemented various tricks such as random walks to boost efficiency. Another notable GNN-based recommendation model is NGCF (Wang X. et al., "Neural graph Collaborative Filtering", SIGIR, 165-174, 2019). NGCF relies on a message passing architecture, which yields a complex graph propagation operation.

Later, the LightGCN (He X. et al., "LightGCN: Simplifying and Powering Graph Convolution Network for Recommendation", SIGIR, 639-648, 2020) model was proposed, advocating for a simpler and more lightweight architecture than the one introduced in NGCF. Such architecture resulted in improved effectiveness over NGCF, thus questioning common GNN practices in recommendation. The LightGCN model defines a bipartite graph on users and items where an edge indicates the interaction of a user on an item. Based on this graph, the approach learns user and item embeddings by using a linear, lightweight convolution operation that only consists of a weighted sum. However, since LightGCN is based on a standard bipartite graph made of user and item nodes it is unable to benefit from query information in the JPSR task.

The approach developed by Wang X. et al. in "Disentangled Graph Collaborative Filtering" (SIGIR, 1001-1010, 2019) extends LightGCN to integrate the notion of user intents, where the user intents are considered as latent variables, learned by the model. Kim K. M. et al. ("Tripartite Heterogeneous Graph Propagation for Large-scale Social Recommendation", RecSys: Late-Breaking Results, 56-60, 2019) also defined a GNN approach over a heterogeneous tripartite graph made of three types of nodes (user, item, and group).

Finally, hypergraph neural networks (HGNN) extend GNN techniques to hypergraphs. Most works on the topic tackle general machine learning problems such as node classification. Feng Y. et al., ("Hypergraph Neural Networks", AAAI, 3558-3565, 2019) were the first to extend graph convolution to hypergraphs by replacing the adjacency matrix with the incidence matrix to capture the hypergraph topology. This approach was later enhanced by Bai S. et al. in "Hypergraph Convolution and Hypergraph Attention" (Pattern Recognition 110 (2021), 1-30) to integrate attention mechanisms. Dong Y. et al. ("HNHN: Hypergraph Networks with Hyperedge Neurons, arXiv:2006.12278 (2020)) investigated different possible choices of the aggregation operator used in the convolution and their impact on the hypergraph network performance. Besides these works, HGNNs were also recently used for next-item recommendation. Wang J. et al. ("Next-item Recommendation with Sequential hypergraphs", SIGIR, 1101-1110, 2020) define a sequence of hypergraphs capturing the item correlation over different time periods and aggregates the item representation across periods using a gating mechanism. Wang J. et al. ("Session-based Recommendation with Hypergraph Attention Networks", SDM, 82-90, 2021) extended this approach through the introduction of a hypergraph attention network designed to highlight informative items in a given time window. These two works by Wang J *et al.* are however specifically designed for next-item recommendation and adapting them to JPSR is not straightforward.

## Summary

The present disclosure addresses the problem of unifying search and recommendation tasks, in particular the Joint Personalized Search and Recommendation (JPSR) problem. To tackle this problem, HyperSaR is a hypergraph convolutional approach for search and recommendation. HyperSaR overcomes the disadvantages of the prior art by providing a unique model for the two tasks that takes into account all available information. This is particularly appealing to platforms that offer search and recommendation services to a shared user base over common items. Such platforms then need to deploy and maintain only one algorithm instead of two, which results in more streamlined solutions and fewer associated costs. In particular, training on user identification data, content items interacted on by the user and queries input by the user enables more accurate modeling of the users and items thanks to the increased volume and diversity of exploitable information.

From the interaction data, HyperSaR first builds a hypergraph composed of user identification data (such as a user profile), item and query term nodes in which recommendation instances form user-item edges and search instances define user-item-query hyperedges. To train HyperSaR, whose parameters consist simply of the base (aka 'layer-0') embeddings of the hypergraph nodes, the embeddings are propagated using hypergraph convolution and form the training loss as the combination of two complementary objectives. The first one amounts to assessing the probability of an interaction, while the second one aims at predicting the query of a search interaction for a given (user, item) pair.

According to an embodiment, there is provided a computer-implemented method of training a hypergraph convolutional network, HGCN, to retrieve content items. The method comprises receiving training data comprising a plurality of search instances and a plurality of recommendation instances, wherein each search instance comprises a user profile, a query comprising one or more query terms and a content item, and wherein each recommendation instance comprises a user profile and a content item. The method further comprises constructing a hypergraph from the training data, wherein each node of the hypergraph represents a user profile, a query term or a content item, and wherein the hypergraph represents each of the plurality of search instances and each of the plurality of recommendation instances as a hyperedge linking corresponding nodes; randomly initializing the base embeddings associated with the hypergraph nodes to constitute the base layer of the HGCN. The method further comprises propagating the base embeddings through one or more convolutional layers of the HGCN to obtain, for each of the convolutional layers, respective embeddings of the nodes of the hypergraph; computing, based on an aggregation of the base embeddings and the respective embeddings obtained from each of the convolutional layers, a first loss based on a prediction of an item given a corresponding user profile and query and a second loss based on a prediction of a query given a corresponding user profile and content item; and updating the base embeddings of the HGCN based on a combination of the first loss and the second loss.

The technical advantage of the method is to enable the training of a single neural network model using both search instances and recommendation instances. This results in a trained model that unifies both search and recommendation tasks. Accordingly, when deployed in real-world scenarios, only one algorithm is deployed and maintained for both search and recommendation, thereby reducing costs. Additionally, because the model is trained on both search and recommendation data, the model can be fed with more data than non-unified search approaches and recommendation approaches. Having access to more data therefore means more accurate modeling.

According to an aspect, the method may further comprise aggregating the base embeddings and the respective embeddings obtained from each of the convolutional layers using a convex combination of the embeddings.

According to an aspect, computing the first loss may comprise computing a query embedding from a sum of the embeddings of the query terms. The first loss may be computed using a Bayesian Personalized Ranking loss or a pointwise cross-entropy loss.

According an aspect, the second loss may be a sum of a loss associated with a prediction of a query given a corresponding user profile and a loss associated with a prediction of the query given a corresponding content item.

According to an aspect, the base embeddings may comprise, for each of the plurality of recommendation instances, an all-zero vector representing an absent query for the plurality of recommendation instances. According to another aspect, the base embeddings may comprise, for each of the plurality of recommendation instances, an embedding representing an absent query, wherein the embedding is equal to a mean of the embeddings of the query terms found in the training data. According to yet another aspect, the base embeddings may comprise a randomly initialized and trainable embedding representing an absent query for the plurality of recommendation instances, which is shared across the recommendation instances.

According to an aspect, the HGCN comprises two or more convolutional layers with different levels of connections between user profiles and content items.

According to an aspect, the method may further comprise, for each search instance, determining the one or more query terms by comparing a query entered by the respective user to a database of frequent query terms.

According to an aspect, the content item may be an image, audio or video content.

According to an embodiment, there is provided a method of ranking content items. The method comprises receiving, from a user computing device, a user profile and, optionally, a query input by the user; obtaining, from a database, a plurality of content items; processing, by the hypergraph convolutional network including at least one hyperedge and trained according to the method described above, the user profile, the query input and the plurality of content items to obtain a score for each of the plurality of content items, wherein each of the plurality of content items is ranked according to the score; and outputting the content items ranked according to the score to the user computing device for performing search and recommendation.

The technical advantage of the method is to provide a single model that provides recommendations to a user in addition to enabling the user to search.

According to an aspect, the user profile may comprise a user identifier, one or more of a username, a location of the user and demographic information associated with the user.

According to an embodiment, there is provided one or more computer-readable storage media having stored thereon computer-executable instructions that, when executed by a processor, cause the processor to perform the methods described above.

According to an embodiment, there is provided an apparatus comprising processing circuitry, the processing circuitry being configured to perform the methods described above.

**Description of the Figures**

The accompanying drawings are incorporated into and form a part of the specification for the purpose of explaining the principles of the embodiments. The drawings are not to be construed as limiting the embodiments to only the illustrated and described embodiments of how they can be made and used. Further features and advantages will become apparent from the following and more particularly from the description of the embodiments, as illustrated in the accompanying drawings, wherein:

FIG. 1A illustrates an example of the formation of a hypergraph from search instances and recommendation instances in accordance with an embodiment;

FIG. 1B is a block diagram illustrating the structure of the HyperSaR Hypergraph Convolutional Network, in accordance with an embodiment;

**FIG. 2** is a flow diagram illustrating a method of training the HyperSaR neural network in accordance with an embodiment;

**FIG. 3** is a flow diagram illustrating a method of ranking content items using the HyperSaR neural network in accordance with an embodiment;

**FIG. 4A** illustrates experiment results applying the HyperSaR neural network to the Naver dataset;

**FIG. 4B** illustrates experiment results applying the HyperSaR neural network to the MovieLens dataset;

**FIG. 5** illustrates an example of architecture in which the disclosed methods may be performed.

## Detailed Description

Described herein are computing systems and computer-implemented methods for providing relevant content items to a user. Specifically, a hypergraph convolutional neural network (HGCN) for search and recommendation (HyperSaR) is trained to rank content items in response to receiving search input from a user and also in response to receiving input indicating that a user requires recommendation. In other words, the hypergraph convolutional network described herein provides a single model that performs both search and recommendation tasks.

The training of the HGCN will first be described. The training data comprises a plurality of search instances, $\mathcal{X}_S$, and a plurality of recommendation instances, $\mathcal{X}_R$. The set of training interactions is therefore defined as $\mathcal{X} = \mathcal{X}_S \cup \mathcal{X}_R$. The training data is stored in any suitable memory or storage, such as a database. The computing device, for example a server that executes the HGCN, is communicatively coupled to the storage to obtain the training data. The storage may be a component of the computing device or may be external to the computing device.

Defining a set of user profiles as $\mathcal{U}$, and a set of content items as $\mathcal{J}$, each search instance $x \in \mathcal{X}_S$ is a tuple composed of a user profile, $u_x \in \mathcal{U}$, a query $q_x$ formulated by the user corresponding to the user profile, and a content item $i_x \in \mathcal{J}$ which the user interacted on for this query. A recommendation instance $x \in \mathcal{X}_R$ is a pair made of a user profile $u_x \in \mathcal{U}$ and a content item $i_x \in \mathcal{J}$ which the user interacted on. The user profile comprises any suitable data that identifies the user. Each user profile may comprise a unique code, number or tag corresponding to the user-identification data. Such user-identification data may comprise information input by the user, such as a username when the user logs into the computing system. Data about the user such as location information, tastes and preferences, may be indirectly obtained from monitoring user-clicked items on web pages, the user's IP address and so on. Additionally, demographic data, such as age, gender, location of residence, may be directly obtained from the user when the user registers with the computing system. The content item may be one of an image, video content, audio content and textual content. The content item may comprise a web page. Although the nature of interactions considered in this framework is not constrained, to determine the content item, implicit feedback (e.g., clicks on items, check-ins for points-of-interest, video views) is used, as implicit feedback constitutes the most widely available signal in a realistic setting. The problem of Joint Personalized Search and Recommendation (JPSR) then consists in learning a model from the search and recommendation instances in $\mathcal{X}$ which maps items to their relevance scores given a user and a (potentially empty) query.

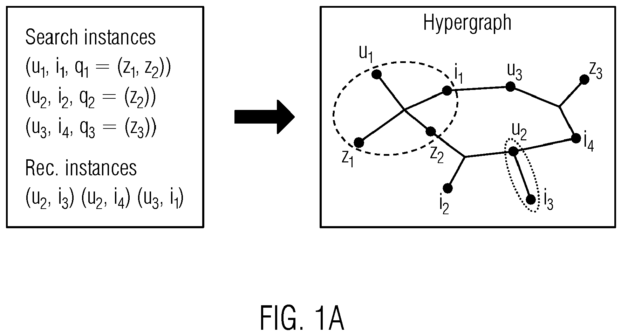

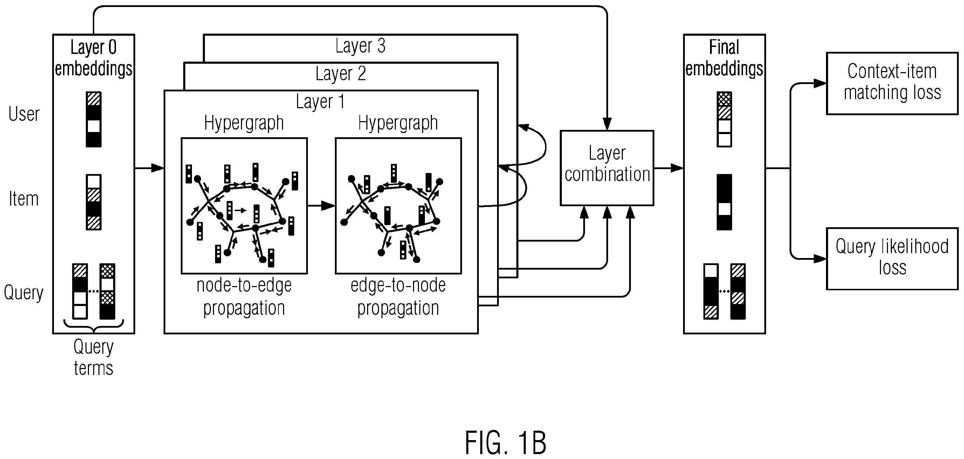

**FIG. 1** illustrates the HyperSaR Hypergraph Convolutional Neural Network. HyperSaR defines a hypergraph-based formulation of the problem to effectively integrate heterogeneous (search and recommendation) interactions in a unified framework. Specifically, **FIG. 1A** illustrates the formation of a hypergraph according to an embodiment. The nodes of the hypergraph are generated from the plurality of search instances, $\mathcal{X}_S$, and the plurality of recommendation instances, $\mathcal{X}_R$ $\mathcal{X}_R$ of the training data. The hypergraph comprises user nodes corresponding to the user profiles $u_x$, query terms, $z_x$, extracted from the queries $q_x$, and the content items $i_x$. The nodes are connected by hyperedges such that a search instance is represented as a hyperedge linking a user profile, a content item and one or several query terms (indicated by the dashed line), and a recommendation instance is represented as a hyperedge between a user profile and a content item (indicated by the dotted line). The hypergraph is an undirected hypergraph.

In an embodiment, the query terms, $z_x$, are frequent query terms extracted from the queries $q_x$ by comparing a respective query to a database of frequent query terms. In this sense, the query terms correspond to keywords. For example, if the user were to input a Point-of-Interest (POI) domain query "cheap restaurant serving Sichuanese cuisine in the south of Paris", four query terms are identified: 'cheap', 'restaurant', 'Sichuanese cuisine', and 'south of Paris'. Query terms are therefore observed variables, obtained a priori from the queries.

Formally, let $\mathcal{H} = (\mathcal{V}, \mathcal{E})$ denote the hypergraph with nodes $\mathcal{V}$ and hyperedges $\varepsilon$. The set $\mathcal{V}$ contains the user profile nodes $\mathcal{U}$ $\mathcal{U}$, the content item nodes $\mathcal{J}$, and the query term nodes $\mathcal{Z}$. The hyperedges $\varepsilon$ include the search hyperedges $\mathcal{E}_S \subset \bigcup_{k=1}^{+\infty}\left(\mathcal{U}x\mathcal{J}x\mathcal{Z}^k\right)$ and the recommendation hyperedges $\mathcal{E}_R \subset \mathcal{U}x\mathcal{J}$. The hyperedges $\varepsilon_S$ and $\varepsilon_R$ are respectively built from the search instances $\mathcal{X}_S$ $\mathcal{X}_S$ and recommendation instances $\mathcal{X}_R$ $\mathcal{X}_R$. Given a search instance $x = (u_x, i_x, q_x) \in \mathcal{X}_S$ and the query terms $\left(z_{x,1}, ..., z_{x,k}\right) \in \mathcal{Z}^k$ extracted from the query $q_x$, a degree-(k + 2) hyperedge $e = \{u_x, i_x, z_{x,1}, ... z_{x,k}\} \in \varepsilon_S$ is created. Similarly, a recommendation instance $x = (u_x, i_x) \in \mathcal{X}_R$ yields a degree-2 hyperedge (in other words, an ordinary edge) $e = \{u_x, i_x\} \in \varepsilon_R$.

Similar to the characterization of a graph by an adjacency matrix, a hypergraph is uniquely identified by its incidence matrix. The incidence matrix $H$ of the hypergraph $\mathcal{H}$ is a $|\mathcal{V}|x|\mathcal{E}|$ binary matrix defined as follows:

$$H_{ij} = \begin{cases} 1 \; if \; v_i \in e_j \\ 0 \; otherwise \end{cases}$$

where $1 \le i \le |\mathcal{V}|$ and $1 \le j \le |\varepsilon|$ denote node indices and hyperedge indices, respectively. Intuitively, a row in matrix $H$ indicates all the hyperedges a node is part of, and a column conversely gives all the nodes a hyperedge connects.

FIG. 1B illustrates the structure of the HyperSaR hypergraph convolutional neural network (HGCN). The HGCN is configured to receive, as input, the hypergraph generated from the plurality of search instances and the plurality of recommendation instances. Each node $i$ is first associated with a respective base embedding $E_{\mathcal{V},i}^{(0)}$ (each node's 'layer-0' embedding). The base embeddings are randomly-initialized vectors that constitute the base layer of the HGCN. As will be described in more detail below, the base embeddings are learned by backpropagation.

The first convolutional layer of the one or more convolutional layers is configured to receive as input the base embeddings. The first convolutional layer is configured to compute a first embedding of the nodes of the hypergraph, which is output to the second convolutional layer. The second convolutional layer is configured to compute, using the embedding received from the first convolutional layer, a second embedding. Each convolutional layer, $i$, is therefore configured to receive an embedding from a previous layer, $i$-1, to generate a respective embedding of the nodes of the hypergraph based on the received embedding, and to output the generated embedding to the subsequent convolutional layer, $i$+1. Accordingly, the base embeddings are propagated through the one of more convolutional layers of the hypergraph convolutional network. The embeddings respectively output by each of the one or more convolutional layers are combined with the base embeddings (layer combination) by aggregation to generate final embeddings of the nodes of the hypergraph. It is to be understood that the three convolutional layers illustrated in the figure are exemplary and that the hypergraph convolutional network may have any suitable number of layers. In some embodiments, the hypergraph convolutional network comprises one convolutional layer. In some embodiments, the hypergraph convolutional network comprises a plurality of convolutional layers, preferably two or three convolutional layers. In an embodiment, the convolutional layers set out different levels of connections between items (i.e., content items) and users (i.e. user profiles).

More formally, the hypergraph convolution operation can be decomposed in two steps: (i) the node embeddings are propagated to the hyperedges they belong to and aggregated there as hyperedge embeddings, and (ii) the hyperedge embeddings are propagated back to the nodes and combined to form the new node embeddings. Formally, denoting as $E_{\mathcal{V},i}^{(k)}$ and $E_{\mathcal{E},j}^{(k)}$ the layer-k embeddings of a node $i$ and an hyperedge $j$, respectively, the hypergraph convolution operation in its most general form is given by:

$$E_{\mathcal{E},j}^{(k)} = AGG_{\mathcal{E}}\left(\left\{E_{\mathcal{V},i}^{(k-1)}:i \in \mathcal{N}_j^{\mathcal{E}}\right\}\right) \quad (1a)$$

$$E_{\mathcal{V},i}^{(k)} = AGG_{\mathcal{V}}\left(\left\{E_{\mathcal{E},j}^{(k)} : j \in \mathcal{N}_i^{\mathcal{V}}\right\}\right) \qquad (1b)$$

where $\mathcal{N}_j^{\mathcal{E}}$ (resp. $\mathcal{N}_i^{\mathcal{V}}$) denotes the set of nodes connected by hyperedge $j$ (resp., the set of hyperedges node $i$ is part of), i.e., the neighborhood of hyperedge $j$ (resp., node $i$) in the hypergraph. The aggregation operators $AGG_{\mathcal{E}}$ and $AGG_{\mathcal{V}}$ usually take the form of a weighted sum optionally followed by a fully-connected layer. Some embodiments adopt a weighted sum for $AGG_{\mathcal{E}}$ and the combination of a weighted sum and a fully-connected layer for $AGG_{\mathcal{V}}$. Other embodiments define both aggregation operators using fully-connected layers to enable hyperedge embeddings to have a nonlinear dependency with node embeddings. In a preferred embodiment, both aggregation operators are a simple weighted sum. Adopting the sum operator, along with standard normalization based on node and hyperedge degrees, the HyperSaR convolution operation is defined as follows:

$$E_{\mathcal{E},j}^{(k)} = \frac{1}{\sqrt{|\mathcal{N}_j^{\mathcal{E}}|}} \Sigma_{i \in \mathcal{N}_j^{\mathcal{E}}} \frac{1}{\sqrt{|\mathcal{N}_i^{\mathcal{V}}|}} E_{\mathcal{V},i}^{(k-1)} \qquad (2a)$$

$$E_{\mathcal{V},i}^{(k)} = \frac{1}{\sqrt{|\mathcal{N}_i^{\mathcal{V}}|}} \Sigma_{j \in \mathcal{N}_i^{\mathcal{V}}} \frac{1}{\sqrt{|\mathcal{N}_j^{\mathcal{E}}|}} E_{\mathcal{E},j}^{(k)} \qquad (2b)$$

where $|\mathcal{N}_j^{\mathcal{E}}|$ is the number of nodes connected by hyperedge $j$ and $|\mathcal{N}_i^{\mathcal{V}}|$ is the number of hyperedges node $i$ is part of. Denoting the hyperedge degree matrix as $D_{\mathcal{E}} = diag\left(|\mathcal{N}_j^{\mathcal{E}}| : j \in \mathcal{E}\right) \in \mathbb{R}^{|\mathcal{E}x\mathcal{E}|}$ and the node degree matrix as $D_{\mathcal{V}} = diag\left(|\mathcal{N}_i^{\mathcal{V}}| : i \in \mathcal{V}\right) \in \mathbb{R}^{|\mathcal{V}x\mathcal{V}|}$, the matrix form of the HyperSaR convolution can be written as:

$$E_{\mathcal{E}}^{(k)} = \left(D_{\mathcal{E}}^{-1/2} H^T D_{\mathcal{V}}^{-1/2}\right) E_{\mathcal{V}}^{(k-1)} \qquad (3a)$$

$$E_{\mathcal{V}}^{(k)} = \left(D_{\mathcal{V}}^{-1/2} H D_{\mathcal{E}}^{-1/2}\right) E_{\mathcal{E}}^{(k)} \qquad (3b)$$

where $H$ is the incidence matrix of the hypergraph. After $L$ layers of propagation in the hypergraph, the node embeddings of each layer $\left\{E_{\mathcal{V}}^{(0)}, E_{\mathcal{V}}^{(1)}, ..., E_{\mathcal{V}}^{(L)}\right\}$ are obtained. Each $E_{\mathcal{V}}^{(k)}$ can be decomposed as $\left(E_{\mathcal{U}}^{(k)}, E_{\mathcal{J}}^{(k)}, E_{\mathcal{Z}}^{(k)}\right)$ which correspond respectively to the user profile embeddings, content item embeddings and query term embeddings at layer $k$. The embeddings at different layers may be aggregated using, for example, a convex combination:

$$E_{\mathcal{U}} = \Sigma_{k=0}^L \alpha_k^{\mathcal{U}} E_{\mathcal{U}}^{(k)}, E_{\mathcal{J}} = \Sigma_{k=0}^L \alpha_k^{\mathcal{J}} E_{\mathcal{J}}^{(k)}, E_{\mathcal{Z}} = \Sigma_{k=0}^L \alpha_k^{\mathcal{Z}} E_{\mathcal{Z}}^{(k)} \qquad (4)$$

where the layer weights $\alpha_k^{\mathcal{U}}$, $\alpha_k^{\mathcal{J}}$ and $\alpha_k^{\mathcal{Z}}$ are hyperparameters such that $\Sigma_{k=0}^L \alpha_k^{\mathcal{U}} = \Sigma_{k=0}^L \alpha_k^{\mathcal{J}} = \Sigma_{k=0}^L \alpha_k^{\mathcal{Z}} = 1$. The practical choice of the layer weights will be further discussed below.

The HGCN is configured to compute two loss functions based on the final embeddings: a first loss based on a prediction of a content item given a corresponding user profile and a second loss based on a prediction of a query given a corresponding user profile and content item. The training loss used to update the base embeddings is the combination of the first loss (referred to herein as the context-item matching loss) and the second loss (referred to herein as the query likelihood loss).

More specifically, given the final user profile embeddings $E_\mathcal{U}$ , content item embeddings $E_\mathcal{I}$ , and query term embeddings $E_\mathcal{Z}$ obtained from the propagation in the hypergraph, the loss used to train the HyperSaR model's parameters - which solely consist of the layer-0 embeddings $E_\mathcal{V}^{(0)}$ - can be defined.

For a given interaction, the purpose of the context-item matching loss is to enforce that the embeddings of the user profile and query terms (in the case of search interactions) are close to the embedding of the content item with which the user interacted. The user profile and the query are designated here as the context. To match the context and the item embeddings, a dot product is used because of its demonstrated effectiveness in comparison to more complex scoring operations, and efficiency at inference time.

Before detailing the computation of the context-item matching score, the matter of the query embedding is first addressed. The interactions on which the model is trained comprise both search and recommendation interactions. Because of this heterogeneity in the data, the two cases are tackled separately:

Let $x = (u_x, i_x, q_x) \in \mathcal{X}_S$ be a search interaction. As detailed above, query terms $(z_{x,1}, ..., z_{x,k})$ are extracted from queries $q_x$. The embedding of $q_x$ is then defined as the sum of its respective query term embeddings:

$$E_{\mathcal{Z},q_x} = \sum_{i=1}^{k} E_{\mathcal{Z},z_{x,i}}$$

A sum is adopted instead of a mean to use the number of query terms as a "confidence" factor in the loss. Indeed, an instance with a greater number of query terms will lead to a sigmoid in a context-item matching loss $L_{CIM}$ (defined below) that is closer to 0 or 1 and thus yield a larger contribution in the loss.

Let $x = (u_x, i_x) \in \mathcal{X}_R$ $X_R$ be a recommendation interaction. In this case, no query is available, i.e., $q_x = \emptyset$. In a first embodiment, $E_{\mathcal{Z},q_x}$ is set as an all-zero vector, $E_{\mathcal{Z},\emptyset} = 0$ . In one embodiment, the query term set $\mathcal{Z}$ $\mathcal{Z}$ is augmented with an artificial zero-query entry and learn the additional embedding corresponding to it. In another embodiment, $E_{\mathcal{Z},q_x}$ $E_{\mathcal{Z},q_x}$ is defined as the mean query term embedding in $E_\mathcal{Z}$ $E_\mathcal{Z}$ .

Based on the definition of the query embedding, $E_{\mathcal{Z},\emptyset} = 0$ , the context-item matching score for an interaction $x$ consisting of a user profile $u_x$, a content item $i_x$ and a query $q_x$ (potentially equal to $\emptyset$) is then computed as the sum of dot products between pairs of embeddings:

$$\hat{y}_{u_x,i_x,q_x} = E_{\mathcal{U},u_x}{}^T E_{\mathcal{I},i_x} + E_{\mathcal{U},u_x}{}^T E_{\mathcal{Z},q_x} + E_{\mathcal{I},i_x}{}^T E_{\mathcal{Z},q_x} \qquad (5)$$

This score is finally integrated in a Bayesian Personalized Ranking (BPR) loss (Rendle, S. et al., "BPR: Bayesian personalized Ranking from Implicit Feedback", UAI, 452-461, 2009) - a pairwise ranking loss widely used in recommendation. This yields the context-item matching loss:

$$\mathcal{L}_{CIM} = -\frac{1}{|\mathcal{X}|} \sum_{x \in \mathcal{X}} \sum_{i_n \in \mathcal{I} \backslash \{i_x\}} \log \sigma \left( \hat{y}_{u_x,i_x,q_x} - \hat{y}_{u_x,i_n,q_x} \right) + \lambda \left\| E_\mathcal{V}^{(0)} \right\|_F^2 \qquad (6)$$

where $i_n \in \mathcal{I} \backslash \{i_x\}$ denotes a negative sample item, $\sigma$ is the sigmoid function, $\lambda$ balances the strength of the $L_2$ regularization on the model parameters $E_\mathcal{V}^{(0)}$ , and $\|\cdot\|_F$ indicates the Frobenius norm.

The context-item matching loss is combined with an additional loss defined on the search instances, which aims at making the embeddings more suitable for the retrieval task. For that purpose, a query likelihood loss is adopted which measures to what extent a user and an item are individually likely to 'produce' the query terms. First, the user-specific and item-specific probability distributions over query terms are defined using a softmax formulation as follows:

$$p(z|u) = \frac{exp(E_{U,u}{}^T E_{Z,z})}{\sum_{z' \in Z} exp(E_{U,u}{}^T E_{Z,z'})} \qquad (7a)$$

$$p(z|i) = \frac{exp(E_{J,i}{}^T E_{Z,z})}{\sum_{z' \in Z} exp(E_{J,i}{}^T E_{Z,z'})} \qquad (7b)$$

Intuitively, the probability $p(z|u)$ is large when user $u$ and query term $z$ are close in the embedding space, and similarly for $p(z|i)$. It is noteworthy to remark that this co-activation behavior between users/items and query terms is consistent with the context-item matching score defined in Equation 5, which thus lead both objectives to mutually benefit each other. The query likelihood loss is then obtained from the sum of the likelihood according to $p(z|u_x)$ and the likelihood according to $p(z|i_x)$ for all search interactions $x \in \mathcal{X}_S$:

$$L_{QL} = -\frac{1}{|\mathcal{X}_S|} \sum_{x \in \mathcal{X}_S} \frac{1}{|q_x|} \sum_{z \in q_x} \log p(z|u_x) - \frac{1}{|\mathcal{X}_S|} \sum_{x \in \mathcal{X}_S} \frac{1}{|q_x|} \sum_{z \in q_x} \log p(z|i_x) \qquad (8)$$

Note that the loss is computed separately from $p(z|u_x)$ and $p(z|i_x)$, instead of using a single (user, item)-specific distribution $p(z|u_x, i_x)$. The motivation for this is to avoid conflating the contribution of the user and that of the item to the query reconstruction, which was found to be detrimental to the performance in practice. Thus, the query likelihood loss described herein pushes both the user and item embeddings to be close to the embeddings of the terms in the query. Additionally, unlike prior art techniques such as Zamani's reconstruction loss, which rely on pre-trained word embeddings, the query term embeddings described herein are fully jointly learned with user and item embeddings. Being independent from pre-trained word embeddings makes the present approach more adaptable and robust to different domains and languages.

The two losses are linearly combined using a balancing hyperparameter $\eta$ as $L = L_{CIM} + \eta L_{QL}$. The model parameters - the layer-0 embeddings $E_V^{(0)}$ - are then learned by minimizing $L$ using stochastic gradient descent.

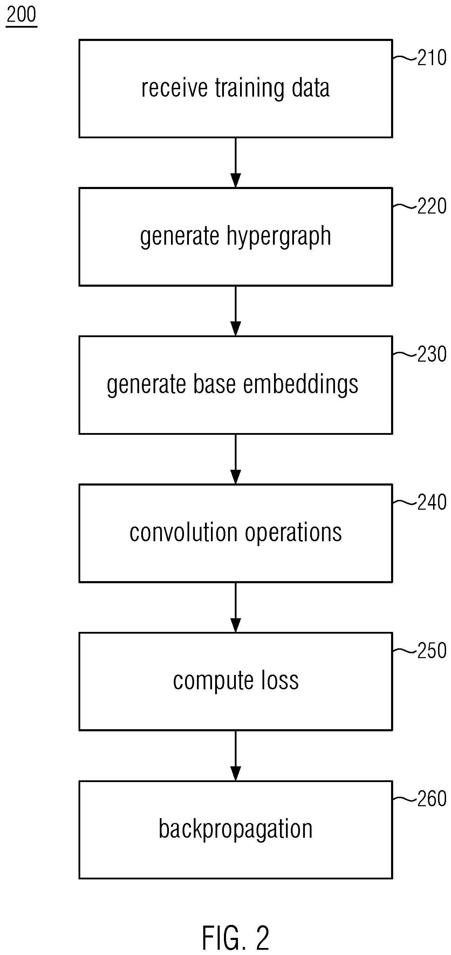

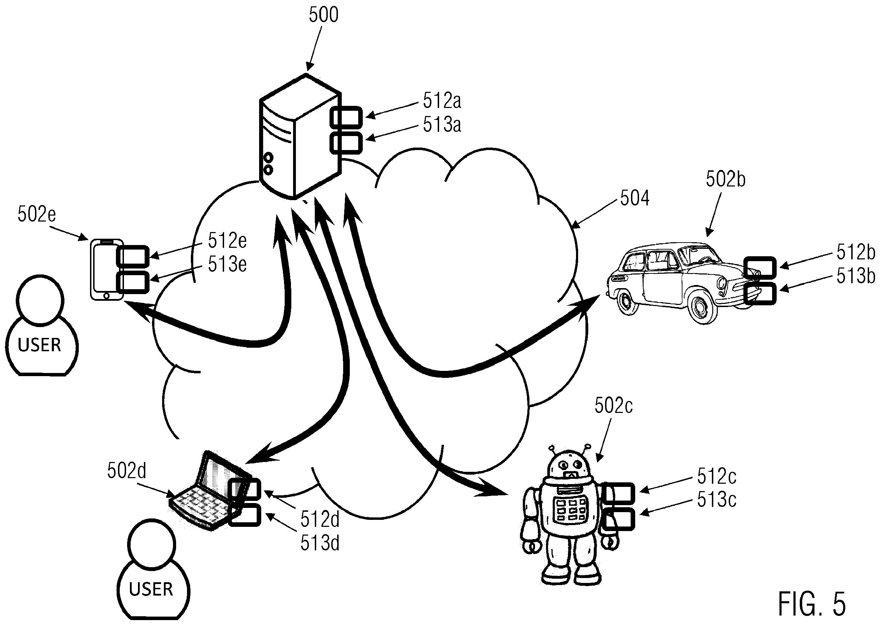

**FIG. 2** is a flow diagram illustrating a method 200 of training the HGCN described above with reference to FIG. 1A and 1B. The method is performed by a computing device or computing system, such as that show in **FIG. 5** below.

At step 210, training data is received by the computing system. The computing system may obtain the training data in any suitable manner from a data store, such as a database, that stores the training data. As described above, the training data comprises a plurality of search instances and a plurality of recommendation instances. Each search instance comprises a user profile, a query comprising one or more query terms, and a content item. Each of the plurality of recommendation instances comprises a user profile and a content item. Each of the plurality of recommendation instances does not comprise a query.

At step 220, a hypergraph is generated by the computing system based on the training data. Each node of the hypergraph represents a user profile, a query term or a content item. The nodes of the hypergraph are connected by hyperedges. The hypergraph represents each of the plurality of search instances and each of the plurality of recommendation instances as a respective hyperedge linking corresponding nodes.

At step 230, the hypergraph representation of the training data is input into the trained HGCN. The HGCN generates base embeddings of the hypergraph by randomly initializing d-dimensional vectors representing the nodes of the hypergraph. The randomly-initialized base embeddings associated with the nodes constitute the base layer of the HGCN.

At step 240, the base layer is propagated through one or more convolutional layers of the HGCN. As described above, each convolutional layer receives an embedding of the hypergraph from a preceding convolutional layer and, based on the received embedding, generates a new embedding. The embeddings of each of the one or more convolutional layers and the base layer are then aggregated to form the final embeddings.

At step 250, the HGCN computes a first loss based on a prediction of a content item given a user profile and a corresponding query. The HGCN computes a second loss based on a prediction of a query given a user profile and a corresponding content item.

The first loss and the second loss are combined to compute the training loss. At step 260 the HGCN is further trained by updating the base embeddings based on the training loss using backpropagation.

Once trained, the HGCN is configured to receive a search input from a user and to output at least one content item corresponding to the search input. The search input comprises a user profile and a query. The HGCN is additionally configured to receive a recommendation input from a user and to output at least one content item corresponding to the recommendation input. The recommendation input comprises only the user profile.

More formally, at inference time, an interaction $x$ consists of either a user-query pair $(u_x, q_x)$ (search case) or a user $u_x$ and an empty query $q_x = \emptyset$ (recommendation case). The goal is for the trained model to produce an item ranking that maximizes utility with respect to the user's information needs. To that end, all items $i \in \mathcal{I}$ are scored based on Equation 5. This yields the set of context-item matching scores $\left\{ \widehat{y_{u_x, i, q_x}} \right\}_{i \in \mathcal{I}}$, which are then sorted in descending order to form the final item ranking returned to the user.

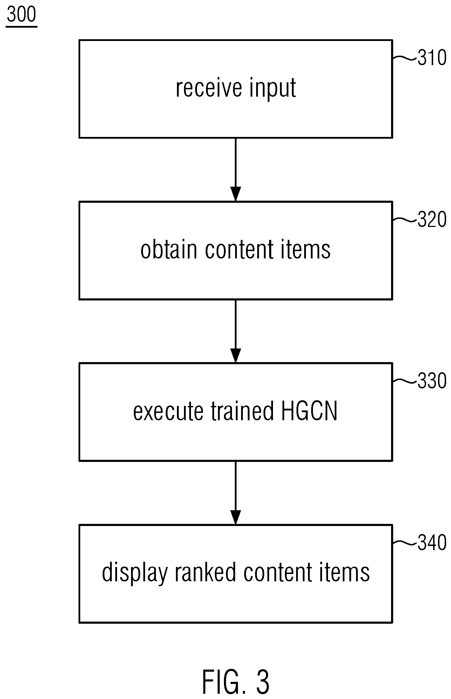

**FIG. 3** is a flow diagram illustrating a method 300 of ranking content items using the HGCN described in **FIGS. 1A** and **1B** and trained in accordance with the method described in relation to **FIG. 2.**

At step 310, a computing device that executes the HGCN receives a search input or a recommendation input. Receiving the search input may comprise a user inputting a search query into the computing device or into a user computing device (for example, a computer, tablet or smartphone) communicatively coupled to the computing device that executes the HGCN. Receiving the recommendation input may comprise a user identifying themselves to the computing device or to a user computing device communicatively coupled to the computing device that executes the HGCN.

At step 320, the computing device that executes the HGCN obtains a plurality of content items. The plurality of content items are stored in any suitable storage or database. The computing device may access the database to retrieve the content items.

At step 330, the computing device that executes the HGCN inputs the information received from the user (the user profile and the optional query) and the plurality of content items in the trained HGCN. The trained HGCN outputs a score for each of the plurality of content items. The score for each content item is proportional to a probability that the respective content item corresponds to the user profile or the user profile and the query.

The computing device ranks the plurality of content items according to the score and, at step 340, to the user computing device for search and recommendation. The user computing device may then display the content items ranked according to the score on a user interface.

**Experimental setup and results**

The experiments described hereafter show that the HyperSaR approach described herein is able to significantly outperform existing models on the JPSR task.

**Datasets**

The experiments were performed on two datasets: a real-world, industrial dataset based on the major South-Korean search engine Naver (https://www.naver.com) and the public, widely-used MovieLens dataset (https://grouplens.org/datasets/movielens).

*Naver.* The Naver dataset is based on a portion of the Naver search engine's logs collected between 01/09/2020 and 07/09/2020. The items in this dataset correspond to Points-of-Interest (POIs) located in South Korea. Interactions here consist of clicks on items; this dataset is thus based on implicit feedback signal. The logs contain two types of interactions: search interactions (including a user, a clicked item and a query) and recommendation interactions (including only a user and a clicked item, without query information). Queries are in Korean language, and were pre-processed using the Okt tokenizer from KoNLPy (https://konlpy.org/en/latest). Duplicates corresponding to repeated (user, item, query) search tuples or (user, item) recommendation tuples were first removed. Then a core-20 filtering was applied to the dataset to discard users and items with less than 20 interactions in total (counting both search and recommendation interactions).

*MovieLens.* The MovieLens dataset was originally introduced for the recommendation task. Its items correspond to movies and it contains two types of interactions: rating interactions, which correspond to a user assigning a rating (between 0 and 5) to a movie, and tagging interactions, in which a user associates a movie with a tag (in English language) consisting of one or a few words. As there exists no public dataset for the JPSR task to our knowledge, this dataset was used as a proxy to the problem. More precisely, rating interactions were considered as recommendation interactions, and tagging interactions as search interactions by assimilating tags and queries. Both tags and queries reflect to some extent the user's perception of an item (or user intent) which justifies the relevance of this dataset to validate HyperSaR. The MovieLens-25M version (https://grouplens.org/datasets/movielens/25m/) was used. Given that the task relates to a scenario with mixed search and recommendation interactions, the data was filtered to retain users with at least one tagging interaction. Rating interactions were binarized to emulate an implicit feedback scenario, and ratings between 0 and 2.5 were considered as signals of irrelevance. A core-10 filtering technique was then applied to keep users and items with at least 10 interactions of any nature (either rating or tagging).

The statistics of those two datasets after pre-processing are summarized in Table 1. For both datasets, a temporal split is followed by considering the first 80% interactions of each user as the training set and the remaining interactions as the test set. The last 25% interactions of the training set (i.e., 20% of the total interactions) are also used as validation set to select hyperparameters (see below).

**Table 1**

| Dataset | #users | #items | #search interactions | | #recommendation interactions | |
|---|---|---|---|---|---|---|
| | | | train | test | train | test |
| Naver | 22,110 | 20,376 | 221,088 | 52,132 | 413,415 | 95,411 |
| MovieLens | 11,807 | 17,880 | 629,189 | 181,170 | 1,387,406 | 317,017 |

**Baselines**

The HyperSaR model is compared against several competitive baselines. Unless specified otherwise, baselines are trained with a BPR loss (Rendle S. et al., "BPR: Bayesian Personalized Ranking from Implicit feedback", UAI, 452-461, 2009). Recommendation approaches - which do not exploit query information - were first considered to show that such approaches are insufficient for the JPSR task. For these approaches, the search instances are simply considered as (user, item) pairs by ignoring queries. Thus, it is emphasized that the recommendation approaches are trained on the same amount of interactions as the methods that exploit the queries.

- **The Matrix Factorization (MF)** (Koren Y. et a/., "Matrix Factorization Techniques for Recommender Systems, Computer 42, 8 (2009), 30-37) is a popular recommendation approach which represents users and items as latent factors (i.e., embedding vectors) and computes user-item matching scores using a dot product.
- **LightGCN** (He X. et al., "LightGCN: Simplifying and Powering Graph Convolution Network for Recommendation", SIGIR, 639-648, 2020) is a state-of-the-art recommendation model based on graph neural networks. As detailed above, it adopts a linear graph convolution operation to smooth user and item embeddings based on their neighborhood.

Baselines that integrate queries in their modeling and thus utilize the same information as HyperSaR were also experimented with:

- **The Factorization Machine (FM)** (Rendle, S. "Factorization machines, *ICDM,* 995-1000, 2010) extends matrix factorization by enabling the integration of content features on the user, item or interaction. In the JPSR scenario, the query content is encoded as a 'multi-hot' encoding vector of the query terms it contains. FM can be seen as a special case of HyperSaR with 0 hypergraph propagation layer and no query likelihood loss.

- **DeepFM** (Guo H. et al., "DeepFM: A Factorization-Machine based neural network for CTR Prediction", IJCAL, 1725-1731, 2017) is a deep learning-based extension of FM. Its scoring function combines the dot product between feature embeddings from FM with learned feature interactions based on stacked fully-connected layers. This model was originally proposed for click-through rate prediction, but it is straightforward to adapt it to our ranking task by training it with a BPR loss. As for FM, its input consists of the user ID, item ID and query term IDs.

- **JSR** (Zamani H. et al., "Learning a Joint Search and Recommendation Model from User-Item Interactions", WSDM, 717-725, 2020) was the first approach to unify search and recommendation in a unique model. As discussed above, this method was introduced for a related yet distinct problem and thus required some adaptations. Originally, JSR is based on text descriptions attached to items; here, the queries (and their query terms) are used in replacement and link each query to its interaction instead of its item. As a consequence, if the same item occurs in two interactions with different queries, the item reconstruction loss will try to reconstruct the different interaction-specific queries (as in HyperSaR's query likelihood loss, see Equation 8) instead of the same item-specific text description. The word embeddings used in the reconstruction loss are from FastText (https://fasttext.cc/) - the Korean embeddings for the Naver dataset and the English ones for Movie-Lens. Given that the word embeddings may differ in dimension with that of the item embeddings, a learned projection matrix was added to match dimensions. Except for this, the version of JSR used in the experiments follows the description of JSR-QL given by Zamani ("Learning a Joint Search and Recommendation Model from User-Item Interactions", WSDM, 717-725, 2020) and is trained with a cross-entropy loss.

- **BM25** (Sparck Jones K. et al., "A Probabilistic Model of Information retrieval: Development and Comparative Experiments - Part 2", Information processing and Management 36, 6, (2000), 809-840) is a simple yet strong retrieval baseline. All the training queries pertaining to the same item are first concatenated to form documents. These documents are then used at test time to rank items based on their matching score with the test queries. Note that this approach can only be used for search instances and not for recommendation instances, which have no query.

To ensure a fair comparison with our approach and due to the unavailability of a public implementation for JSR, all baseline methods were re-implemented in PyTorch for the experiments.

**Evaluation Protocol**

The evaluation was performed on a per-interaction basis. This means that at test time a model will predict a ranking of items for each interaction. Based on the groundtruth consisting of the single interacted item, this ranking is then evaluated in terms of Hit Rate at cutoff 1, 10, and 20 (denoted as HR@1, HR@10, and HR@20, respectively). Note that because there is only one groundtruth item, the Hit Rate is here equivalent to the Recall metric. This evaluation protocol was chosen instead of the more common per-user evaluation as, in the JPSR scenario, users interact with items based on the context (here, the potential query). An item can therefore not be considered as relevant for a user in an absolute manner, but only relatively to the context of the interaction.

The models' performance is reported separately on the search interactions and recommendation interactions of each dataset. This is motivated by the fact that the performance across search and recommendation interactions can vary a lot; combining the results on both types of interactions would thus obfuscate the individual performance on search and recommendation. Therefore, the results presented in the experiments correspond to the average performance over all search instances and the average over all recommendation instances.

**Hyperparameter Setting**

An Adam optimizer was used for all approaches and the embedding size set to 64, the batch size to 1024, the learning rate to 0.001 and the number of negative samples to 1. Negative items are sampled uniformly from the whole set of items $\mathcal{I}$, $\mathcal{I}$. The L2 regularization weight was simply fixed to 0 as only limited impact on performance was observed in the preliminary experiments. For the models which exploit queries (FM, DeepFM, JSR, BM25, and HyperSaR), the number of query terms was set to 2000 and the query terms which (i) have the highest frequencies in queries and (ii) occur in less than 10% of all the queries (to eliminate stop words) were selected. The impact of the number of query terms on performance will be discussed below.

The layer weights (see equation 4) $\alpha^u$ and $\alpha^{\mathcal{I}}$ to uniform, ie., $1/(L+1)$. As to $\alpha^Z$, it was found that allocating more mass to earlier layers was more beneficial in practice and thus was set $\alpha_0^Z = 1$ and $\alpha_k^Z = 0$ for k>0.

Additionally, the following hyperparameters were selected on the validation set: edge dropout rate (Rong Y. et al., "DropEdge: Towards deep Graph Convolutional Networks on Node Classification, ICLR, 2020) (for LightGCN, HyperSaR), weight dropout rate (Srivastava N et al., "Dropout: A Simple Way to Prevent Neural networks from Overfitting", Journal of Machine Learning Research 15, 1 (2014), 1929-1958) (for JSR, DeepFM), number of layers (for LightGCN, DeepFM, JSR, HyperSaR) and loss balancing weight $\eta$ (for JSR, HyperSaR). To avoid a costly grid search, $\eta = 0$ was first kept for JSR and HyperSaR while searching for the dropout rate and number of layers, and then $\eta$ was optimized using the optimal dropout rate and number of layers. The range for the dropout rate, number of layers and weight $\eta$ is defined as {0.0, 0.1, 0.2, 0.3}, {0, 1, 2, 3}, and {0.0, 0.001, 0.01}, respectively.

For the hyperparameter selection, the HR@20 score was used on the validation set. A challenge for the selection was to take into account the performance on both the search instances and recommendation instances, which can vary greatly across these two sets. Indeed, the search performance can be five times greater than the recommendation performance, due to the additional query signal. Using the overall HR@20 on both interaction types would then hide smaller improvements on recommendation instances. To address this, the HR@20 scores were first normalized separately on search and recommendation instances, by dividing by the maximum performance on each interaction type obtained across the hyperparameter range. Then the two normalized scores were summed and the result was used as criterion for the selection.

**Experimental Results**

**Recommendation Results**

The results on the recommendation instances of the Naver and MovieLens datasets are presented in Table 2. 5 runs per approach were performed on each dataset with different seeds and the average performance reported in terms of HR@{1, 10, 20}, along with the standard error around the mean. To detect significant differences between the HyperSaR model and baselines, a statistical significance testing analysis was conducted based on an unpaired Student t-test with a significance level at 0.01. Table 2 highlights the best (resp. second-best) result for each (dataset, metric) pair using boldface (resp. underline) and indicates statistically significant improvements with †. The improvement percentage and p-value between best and second-best approaches are also shown.

**Table 2**

| Model | Naver | | | MovieLens | | |
|---|---|---|---|---|---|---|
| | HR@1 | HR@10 | HR@20 | HR@1 | HR@10 | HR@20 |
| MF | 0.0061 ±0.0000 | 0.0493 ±0.0002 | 0.0872 ±0.0002 | 0.0031 ±0.0000 | 0.0266 ±0.0001 | 0.0487 ±0.0001 |
| LightGCN | 0.0067 ±0.0001 | 0.0524 ±0.0001 | 0.0924 ±0.0001 | 0.0040 ±0.0000 | 0.0318 ±0.0001 | 0.0566 ±0.0001 |
| FM | 0.0067 ±0.0001 | 0.0535 ±0.0002 | 0.0946 ±0.0003 | 0.0033 ±0.0000 | 0.0278 ±0.0001 | 0.0508 ±0.0001 |
| DeepFM | 0.0066 ±0.0001 | 0.0528 ±0.0004 | 0.0935 ±0.0004 | 0.0035 ±0.0000 | 0.0290 ±0.0001 | 0.0526 ±0.0003 |
| JSR | 0.0063 ±0.0001 | 0.0510 ±0.0001 | 0.0905 ±0.0002 | 0.0042 ±0.0001 | 0.0317 ±0.0002 | 0.0560 ±0.0002 |
| HyperSar | **0.0073 ±0.0001†** | **0.0574 ±0.0002†** | **0.1004±0.0002†** | **0.0044 ±0.0000†** | **0.0334 ±0.0001†** | **0.0590 ±0.0001†** |
| Improv. / $p$ | 8.96%/ 6.17e-3 | 7.29%/ 1.97e-5 | 6.13%/ 6.23e-7 | 4.76%/ 7.95e-3 | 5.03%/ 2.66e-5 | 4.24%/ 8.05e-7 |

First, it is observed that HyperSaR significantly outperforms all baselines on every (dataset, metric) pair, including the state-of-the-art recommendation approach LightGCN. The improvements over the second-best approach range from 6.13% to 8.96% on Naver and from 4.24% to 5.03% on MovieLens. At test time on recommendation instances, all approaches exploit the same information consisting of (user, item) pairs. This means that the improvements obtained by HyperSaR over LightGCN are due to HyperSaR's joint search and recommendation training, which enabled the model to learn more accurate user and item representations. This thus justifies that the recommendation task can benefit from search data and its query signal.

Comparing across baseline approaches, some differences are noted based on the dataset. On Naver, FM was the second-best approach, closely followed by DeepFM and LightGCN. On MovieLens, LightGCN and JSR performed on par and obtained the second-best results. This confirms that LightGCN is still a strong contender on recommendation instances, and only HyperSaR was able to outperform it on both datasets.

**Search Results**

The same procedure as described above for recommendation instances was followed for search instances. The results for search instances are shown in Table 3. Unsurprisingly, it is observed that the approaches which exploit query information (FM, DeepFM, JSR, BM25, HyperSaR) markedly outperformed the purely collaborative filtering approaches (MF, LightGCN) on both datasets. This was predictable as having access to the test-set interaction query constitutes a great advantage to identify the relevant item.

**Table 3**

| Model | Naver | | | MovieLens | | |
|---|---|---|---|---|---|---|
| | HR@1 | HR@10 | HR@20 | HR@1 | HR@10 | HR@20 |
| MF | 0.0063 ±0.0002 | 0.0431 ±0.0004 | 0.0720 ±0.0004 | 0.0019 ±0.0001 | 0.0156 ±0.0004 | 0.0275 ±0.0005 |
| LightGCN | 0.0078 ±0.0000 | 0.0501 ±0.0002 | 0.0821 ±0.0002 | 0.0022 ±0.0001 | 0.0189 ±0.0003 | 0.0331 ±0.0005 |
| FM | 0.1199 ±0.0003 | 0.3890 ±0.0003 | 0.4823 ±0.0006 | 0.0154 ±0.0001 | 0.0856 ±0.0002 | 0.1284 ±0.0002 |
| DeepFM | 0.1207 ±0.0005 | 0.3932 ±0.0013 | 0.4871 ±0.0008 | 0.0165 ±0.0002 | 0.0898 ±0.0004 | 0.1329 ±0.0004 |
| JSR | 0.1912 ±0.0003 | 0.5238 ±0.0005 | 0.5967 ±0.0003 | 0.0088 ±0.0001 | 0.0643 ±0.0003 | 0.1002 ±0.0005 |
| BM25 | 0.1393 ±0.0000 | 0.5049 ±0.0000 | 0.6023 ±0.0000 | 0.0068 ±0.0000 | 0.0598 ±0.0000 | 0.1201 ±0.0000 |
| HyperSaR | **0.2093 ±0.0003†** | **0.5572 ±0.0002†** | **0.6317 ±0.0002†** | **0.0441 ±0.0003†** | **0.1687 ±0.0002†** | **0.2202 ±0.0003†** |
| Improv. / p | 9.47%/ 2.94e-10 | 6.38%/ 2.27e-11 | 4.88%/ 1.63e-14 | 167.27%/ 1.60e-12 | 87.86%/ 1.23e-15 | 65.69%/ 1.69e-15 |

Among the approaches which utilize queries, HyperSaR significantly outperformed all baselines. On the Naver dataset, JSR is a fairly close second, on par with BM25 on HR@20, and is improved over by HyperSaR by 4.88% to 9.47%. The margin between HyperSaR and other approaches is much larger on MovieLens, where the improvements range from 65.69% to 167.27% over the second-best performing approach, DeepFM. Interestingly, JSR performed much worse on MovieLens than on Naver in comparison to other approaches. This could be due to the retrieval method adopted by JSR, which only leverages the query and item information, but not the user. The Naver data is based on actual queries which specifically identify the target item and may not depend much on users. However, on MovieLens, queries (i.e., tags) are more generic (e.g., 'horror') and could apply to many movies. Then, entirely relying on the tag and ignoring the user's movie tastes - as JSR does - is likely to degrade the search results.

**Hyperparameter Impact**

After validating HyperSaR's recommendation and search performance in comparison to baselines, how hyperparameters impact the model's results is analyzed. In particular, three hyperparameters are studied: (i) the number of layers, (ii) the query term vocabulary size, and (iii) the loss balancing weight which controls the weight of the query likelihood loss over the context-item matching loss.

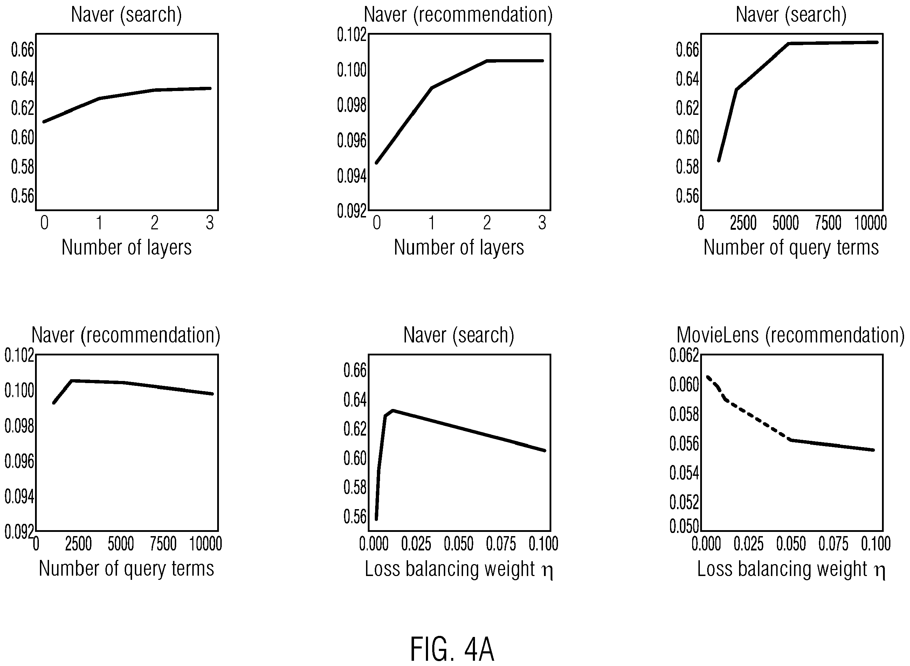

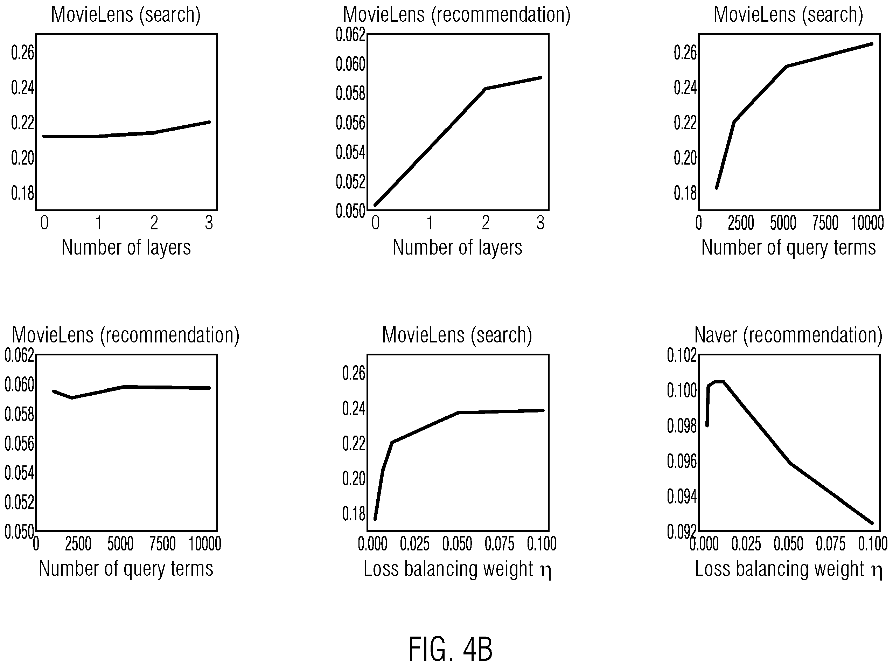

These hyperparameters are focused on as they were found to be the most impactful ones on the results. **FIGS. 4A and 4B** summarize the results for HyperSaR with varied hyperparameters on Naver and MovieLens test sets. Each plot shows the performance of HyperSaR in terms of HR@20 as a function of a given hyperparameter's value, based on one run. The decision to rely on a single run is justified by the very low variance observed for HyperSaR in Tables 2 and 3. The tested values for the number of layers, the query term vocabulary size, and the loss balancing weight $\eta$ respectively correspond to {0, 1, 2, 3}, {1000, 2000, 5000, 10000}, and {0.0, 0.001, 0.005, 0.01, 0.05, 0.1}. Unless a hyperparameter is varied, the 'default' value identified on the validation set is used for the number of layers and loss balancing weight, and 2000 for the query term vocabulary size. For Naver and MovieLens, the default number of layers is respectively 2 and 3, and on both datasets the default loss balancing weight is 0.01.

In **FIGS. 4A and 4B,** distinct trends across search instances and recommendation instances are observed for the different varied hyperparameters. First, the number of layers is more impactful on recommendation instances than on search instances, although in both cases increasing the number of layers improves performance. On both datasets, a plateau seems to be reached around 2 or 3 layers, which is consistent with the findings of previous works (He X. et al., "LightCGN: Simplifying and Powering Graph Convolution Network for Recommendation", SIGIR, 639-648, 2020 and Wang J. et al., "Next-item Recommendation with Sequential Hypergraphs", SIGIR, 1101-1110, 2020). In contrast, the number of query terms has greater impact on search instances than on recommendation instances. This is not surprising, as query terms are tightly related to queries: considering more query terms implies a greater coverage of the query content. A performance plateau at 5000 or 10000 query terms is nonetheless observed, suggesting that further increasing the query term vocabulary size will not be beneficial.

Finally, looking at the plots related to the loss balancing weight $\eta$, different behaviors are noted across the Naver and MovieLens datasets. On Naver, there seems to be a value around 0.01 which is optimal for both search and recommendation performance. However, on MovieLens, increasing $\eta$ consistently results in improved search performance and degraded recommendation performance. This disparity could be due to the different nature of the datasets - one is based on 'true' search and recommendation interactions, while the other contains rating and tagging interactions. In a nutshell, these latter results confirm that the query likelihood loss can benefit the HyperSaR model even though it may in some cases imply trading off between search and recommendation performance.

While some specific embodiments have been described in detail above, it will be apparent to those skilled in the art that various modifications, variations and improvements of the embodiments may be made in the light of the above teachings and within the content of the appended claims without departing from the intended scope of the embodiments. In addition, those areas in which it is believed that those of ordinary skill in the art are familiar have not been described herein in order not to unnecessarily obscure the embodiments described herein. Accordingly, it is to be understood that the embodiments are not to be limited by the specific illustrative embodiments, but only by the scope of the appended claims.

Although the above embodiments have been described in the context of method steps, they also represent a description of a corresponding component, module or feature of a corresponding apparatus or system.

Some or all of the method steps may be implemented by a computer in that they are executed by (or using) a processor, a microprocessor, an electronic circuit or processing circuitry.

The embodiments described above may be implemented in hardware or in software. The implementation can be performed using a non-transitory storage medium such as a computer-readable storage medium, for example a floppy disc, a DVD, a Blu-Ray, a CD, a ROM, a PROM, and EPROM, an EEPROM or a FLASH memory. Such computer-readable media can be any available media that can be accessed by a general-purpose or special-purpose computer system.

Generally, embodiments can be implemented as a computer program product with a program code or computer-executable instructions, the program code or computer-executable instructions being operative for performing one of the methods when the computer program product runs on a computer. The program code or the computer-executable instructions may, for example, be stored on a computer-readable storage medium.

In an embodiment, a storage medium (or a data carrier, or a computer-readable medium) comprises, stored thereon, the computer program or the computer-executable instructions for performing one of the methods described herein when it is performed by a processor. In a further embodiment, an apparatus comprises one or more processors and the storage medium mentioned above.

In a further embodiment, an apparatus comprises means, for example processing circuitry like e.g. a processor communicating with a memory, the means being configured to, or adapted to, perform one of the methods described herein.

A further embodiment comprises a computer having installed thereon the computer program or instructions for performing one of the methods described herein.

The above-mentioned methods and embodiments may be implemented within an architecture such as illustrated in **FIG. 5,** which comprises server 500 and one or more client devices 502 that communicate over a network 504 (which may be wireless and/or wired) such as the Internet for data exchange. Server 500 and the client devices 502 include a data processor 512 and memory 513 such as a hard disk. The client devices 502 may be any device that communicates with server 500, including autonomous vehicle 502b, robot 502c, computer 502d, or cell phone 502e.

More precisely in an embodiment, the techniques according to the embodiments above may be performed at server 500. In other embodiments, the techniques according to the embodiments above may be performed at client device 502 In yet other embodiments, the techniques described in said embodiments may be performed at a different server or on a plurality of servers in a distributed manner.

The invention is defined in the claims. However, below there is provided a non-exhaustive list of non-limiting examples. Any one or more features of these examples may be combined with any one or more features of another example, embodiment, or aspect described herein.

**Claims**

**1.** A computer-implemented method of training a hypergraph convolutional network, HGCN, to retrieve content items, the method comprising:

receiving training data comprising a plurality of search instances and a plurality of recommendation instances, wherein each search instance comprises a user profile, a query comprising one or more query terms and a content item, and wherein each recommendation instance comprises a user profile and a content item; constructing a hypergraph from the training data, wherein each node of the hypergraph represents a user profile, a query term or a content item, and wherein the hypergraph represents each of the plurality of search instances and each of the plurality of recommendation instances as a hyperedge linking corresponding nodes; randomly initializing base embeddings associated with the hypergraph nodes to constitute the base layer of the HGCN; propagating the base embeddings through one or more convolutional layers of the HGCN to obtain, for each of the convolutional layers, respective embeddings of the nodes of the hypergraph; computing, based on an aggregation of the base embeddings and the respective embeddings obtained from each of the convolutional layers, a first loss based on a prediction of an item given a corresponding user profile and query and a second loss based on a prediction of a query given a corresponding user profile and content item; and updating the base embeddings of the HGCN based on a combination of the first loss and the second loss.

2. The method according to claim 1, further comprising aggregating the base embeddings and the embeddings obtained from each of the convolutional layers using a convex combination of the embeddings.

3. The method according to claim 1 or 2, wherein computing the first loss comprises computing a query embedding from a sum of the embeddings of the query terms.

4. The method according to one of claims 1 to 3, wherein the first loss is computed using a Bayesian Personalized Ranking loss or a pointwise cross-entropy loss.

5. The method according to one of claims 1 to 4, wherein the second loss is a sum of a loss associated with a prediction of a query given a corresponding user profile and a loss associated with a prediction of the query given a corresponding content item.

6. The method according to one of claims 1 to 5, wherein the base embeddings comprise, for each of the plurality of recommendation instances, an all-zero vector representing an absent query.

7. The method according to one of claims 1 to 5, wherein the base embeddings comprise, for each of the plurality of recommendation instances, an embedding representing an absent query, wherein the embedding is equal to a mean of the embeddings of the query terms found in the training data.

8. The method according to one of claims 1 to 5, wherein the base embeddings comprise a randomly initialized and trainable embedding representing an absent query, which is shared across the recommendation instances.

9. The method according to one of claims 1 to 8, wherein the HGCN comprises two or more convolutional layers with different levels of connections between user profiles and content items.

10. The method according to one of claims 1 to 9, further comprising, for each search instance, determining the one or more query terms by comparing a query entered by the respective user to a database of frequent query terms.

11. The method according to one of claims 1 to 10, wherein the content item is an image, audio or video content.

12. A method of ranking content items, the method comprising:

receiving, from a user computing device, a user profile and, optionally, a query input by the user; obtaining, from a database, a plurality of content items; processing, by a hypergraph convolutional network including at least one hyperedge and trained according to the method of one of claims 1 to 9, the user profile, the query input and the plurality of content items to obtain a score for each of the plurality of content items, wherein each of the plurality of content items is ranked according to the score; and outputting the content items ranked according to the score to the user computing device for performing search and recommendation.

13. The method of claim 12, wherein the user profile comprises a user identifier, one or more of a username, a location of the user and demographic information associated with the user.

14. One or more computer-readable storage media having stored thereon computer-executable instructions that, when executed by a processor, cause the processor to perform the method of one of claims 1 to 13.

15. An apparatus comprising processing circuitry, the processing circuitry being configured to perform the method of one of claims 1 to 13.

Search instances
$(u_1, i_1, q_1 = (z_1, z_2))$
$(u_2, i_2, q_2 = (z_2))$
$(u_3, i_4, q_3 = (z_3))$

Rec. instances
$(u_2, i_3) (u_2, i_4) (u_3, i_1)$

Hypergraph

FIG. 1A

FIG. 1B

<u>200</u>

```
┌─────────────────────────────┐
│     receive training data   │─── 210
└─────────────────────────────┘
              │
              ▼
┌─────────────────────────────┐
│      generate hypergraph    │─── 220
└─────────────────────────────┘
              │
              ▼
┌─────────────────────────────┐
│   generate base embeddings  │─── 230
└─────────────────────────────┘
              │
              ▼
┌─────────────────────────────┐
│    convolution operations   │─── 240
└─────────────────────────────┘
              │
              ▼
┌─────────────────────────────┐
│        compute loss         │─── 250
└─────────────────────────────┘
              │
              ▼
┌─────────────────────────────┐
│       backpropagation       │─── 260
└─────────────────────────────┘
```

FIG. 2

300

```
                          ┌──────────────────────────┐
                          │                          │⌁310
                          │      receive input       │
                          │                          │
                          └──────────────────────────┘
                                       │
                                       ▼
                          ┌──────────────────────────┐
                          │                          │⌁320
                          │    obtain content items  │
                          │                          │
                          └──────────────────────────┘
                                       │
                                       ▼
                          ┌──────────────────────────┐
                          │                          │⌁330
                          │    execute trained HGCN  │
                          │                          │
                          └──────────────────────────┘
                                       │
                                       ▼
                          ┌──────────────────────────┐
                          │                          │⌁340
                          │  display ranked content items │
                          │                          │
                          └──────────────────────────┘
```

FIG. 3

**Naver (search)**

**Naver (recommendation)**

**Naver (search)**

**Naver (recommendation)**

**Naver (search)**

**MovieLens (recommendation)**

FIG. 4A

MovieLens (search)

MovieLens (recommendation)

MovieLens (search)

MovieLens (recommendation)

MovieLens (search)

Naver (recommendation)

FIG. 4B

FIG. 5

EP 4 202 725 A1

Europäisches
Patentamt

European
Patent Office

Office européen
des brevets

# EUROPEAN SEARCH REPORT

Application Number

**EP 21 30 6907**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/188295 A1 (SIROTKOVIC JADRAN [IE] ET AL) 20 June 2019 (2019-06-20) * abstract * * paragraphs [0013], [0014], [0058] – [0070] * | 1–15 | INV. G06F16/435 |
| X | GB 2 593 963 A (ADOBE INC [US]) 13 October 2021 (2021-10-13) * abstract * * paragraphs [0005] – [0008], [0016] – [0027] * | 1–15 | |
| X | LEI LI ET AL: "News recommendation via hypergraph learning", WEB SEARCH AND DATA MINING, ACM, 2 PENN PLAZA, SUITE 701 NEW YORK NY 10121-0701 USA, 4 February 2013 (2013-02-04), pages 305-314, XP058050277, DOI: 10.1145/2433396.2433436 ISBN: 978-1-4503-1869-3 * abstract * * section "Introduction" * * section "5. Empirical evalutation" * | 1–15 | TECHNICAL FIELDS SEARCHED (IPC) G06F |

The present search report has been drawn up for all claims

| Place of search | Date of completion of the search | Examiner |
|---|---|---|
| Berlin | 29 March 2022 | Siódmok, Wojciech |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 30 6907

This annex lists the patent family members relating to the patent documents cited in the above-mentioned European search report.
The members are as contained in the European Patent Office EDP file on
The European Patent Office is in no way liable for these particulars which are merely given for the purpose of information.

29-03-2022

| Patent document cited in search report | | Publication date | Patent family member(s) | | Publication date |
|---|---|---|---|---|---|
| US 2019188295 | A1 | 20-06-2019 | NONE | | |
| GB 2593963 | A | 13-10-2021 | GB | 2593963 A | 13-10-2021 |
| | | | US | 2021319056 A1 | 14-10-2021 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ZAMANI H. et al.** Learning a Joint Search and Recommendation Model from User-Item Interactions. *WSDM,* 2020, 717-725
- **ZAMANI et al.** *Joint Modeling and Optimization of Search and Recommendation*
- **ZAMANI H. et al.** *DESIRES,* 2018, 36-41
- **WU T.** Zero-Shot Heterogeneous Transfer Learning from Recommender Systems to Cold-Start Search Retrieval. *CIKM,* 2020, 2821-2828
- **YING R.** Graph Convolutional Neural Networks for Web-scale Recommender Systems. *KDD,* 2018, 974-983
- **HAMILTON W. L. et al.** Inductive Representation Learning on Large Graphs. *NeurIPS,* 2017, 1025-1035
- **WANG X. et al.** Neural graph Collaborative Filtering. *SIGIR,* 2019, 165-174
- **HE X et al.** LightGCN: Simplifying and Powering Graph Convolution Network for Recommendation. *SIGIR,* 2020, 639-648
- **WANG X. et al.** Disentangled Graph Collaborative Filtering. *SIGIR,* 2019, 1001-1010
- **KIM K. M. et al.** Tripartite Heterogeneous Graph Propagation for Large-scale Social Recommendation. *RecSys: Late-Breaking Results,* 2019, 56-60
- **FENG Y. et al.** Hypergraph Neural Networks. *AAAI,* 2019, 3558-3565
- **BAI S. et al.** Hypergraph Convolution and Hypergraph Attention. *Pattern Recognition,* 2021, vol. 110, 1-30
- **DONG Y. et al.** *HNHN: Hypergraph Networks with Hyperedge Neurons,* 2020, vol. 2006, 12278
- **WANG J. et al.** Next-item Recommendation with Sequential hypergraphs. *SIGIR,* 2020, 1101-1110

- **WANG J. et al.** Session-based Recommendation with Hypergraph Attention Networks. *SDM,* 2021, 82-90
- **RENDLE, S. et al.** BPR: Bayesian personalized Ranking from Implicit Feedback. *UAI,* 2009, 452-461
- **RENDLE S. et al.** BPR: Bayesian Personalized Ranking from Implicit feedback. *UAI,* 2009, 452-461
- **KOREN Y.** *Matrix Factorization Techniques for Recommender Systems, Computer 42,* 2009, (8), 30-37
- **HE X. et al.** LightGCN: Simplifying and Powering Graph Convolution Network for Recommendation. *SIGIR,* 2020, 639-648
- **GUO H. et al.** DeepFM: A Factorization-Machine based neural network for CTR Prediction. *IJCAL,* 2017, 1725-1731
- **ZAMANI.** Learning a Joint Search and Recommendation Model from User-Item Interactions. *WSDM,* 2020, 717-725
- **SPARCK JONES K. et al.** A Probabilistic Model of Information retrieval: Development and Comparative Experiments - Part 2. *Information processing and Management,* 2000, vol. 36 (6), 809-840
- **RONG Y. et al.** DropEdge: Towards deep Graph Convolutional Networks on Node Classification. *ICLR,* 2020
- **SRIVASTAVA N et al.** Dropout: A Simple Way to Prevent Neural networks from Overfitting. *Journal of Machine Learning Research,* 2014, vol. 15 (1), 1929-1958
- **HE X. et al.** LightCGN: Simplifying and Powering Graph Convolution Network for Recommendation. *SIGIR,* 2020, 639-648
- **WANG J. et al.** Next-item Recommendation with Sequential Hypergraphs. *SIGIR,* 2020, 1101-1110